# EUROPÄISCHE PATENTSCHRIFT

(11) **EP 3 903 367 B1**
(45) Veröffentlichungstag und Bekanntmachung des Hinweises auf die Patenterteilung: **09.04.2025**
(21) Anmeldenummer: 19835422.7
(22) Anmeldetag: 24.12.2019
(51) Int. Cl.: H01M 10/06, B23K 11/00, B23K 11/11, B23K 11/30, H01M 10/12, H01M 50/529, B23K 101/00

(54) **VERFAHREN ZUM VERSCHWEISSEN VON ZELL-INTERKONNEKTOREN, SOWIE SCHWEISSELEKTRODENANORDNUNG HIERFÜR**
METHOD FOR WELDING CELL INTERCONNECTORS, AND WELDING ELECTRODE ARRANGEMENT FOR SAID METHOD
PROCÉDÉ DE SOUDAGE D'INTERCONNECTEURS DE CELLULES ET ENSEMBLE ÉLECTRODE DE SOUDAGE CORRESPONDANT

(30) Priorität: 28.12.2018 DE 102018133644
(43) Veröffentlichungstag der Anmeldung: 03.11.2021
(73) Patentinhaber: Clarios Germany GmbH & Co. KG, 30419 Hannover (DE)
(72) Erfinder: ETEMAD, Ramin, 31535 Neustadt am Rübenberge (DE)
(74) Vertreter: Meissner Bolte Partnerschaft mbB
(86) Internationale Anmeldenummer: PCT/EP2019/087011
(87) Internationale Veröffentlichungsnummer: WO 2020/136195

(56) Entgegenhaltungen:
- DE-A1- 2 455 348
- US-A- 4 429 208
- US-A- 4 485 959

## Beschreibung

Die vorliegende Patentanmeldung betrifft ein Verfahren zum Verschweißen von Interkonnektoren eines Bleisäure-Akkumulators, den Bleisäure-Akkumulator, sowie eine Schweißelektrodenanordnung hierfür.

Herkömmlicherweise weist eine Bleisäurebatterie bzw. ein Bleisäure-Akkumulator für ein Fahrzeug ein Gehäuse auf, welches eine Vielzahl von Kammern umfasst. Diese Kammern werden mithilfe von Gehäusetrennwänden voneinander getrennt. In den Kammern ist (im Einbauzustand des Bleisäure-Akkumulators) jeweils eine elektrochemische Zelle aufgenommen oder angeordnet, wobei jeweils eine elektrochemische Zelle eine Vielzahl von positiven und negativen Elektrodenplatten, welche mittels eines Separators voneinander getrennt sind, insbesondere elektrisch voneinander getrennt sind, und einen Elektrolyten aufweist. Die positiven und negativen Elektrodenplatten können mit einer positiven bzw. negativen pastösen aktiven Masse bedeckt sein und optional kann ein Pastiervlies auf der aktiven Masse angeordnet sein, welches die aktive Masse auf der jeweiligen Elektrodenplatte hält und verhindert, dass sich die aktive Masse von der Elektrodenplatte löst. Um mittels der Anschlusspole des Bleisäure-Akkumulators elektrischen Strom abzugreifen oder zuzuführen, stehen die einzelnen elektrochemischen Zellen miteinander in elektrischer Verbindung, sodass eine Serien-und/oder Parallelschaltung der Vielzahl von elektrochemischen Zellen gebildet werden kann. Dazu werden Interkonnektoren zweier benachbarter elektrochemischer Zellen miteinander durch die die benachbarten elektrochemischen Zellen trennende Gehäusetrennwand hindurch verschweißt. Die Interkonnektoren sind derart ausgebildet, dass sie elektrisch mit der Vielzahl von positiven Elektrodenplatten bzw. der Vielzahl von negativen Elektrodenplatten in Verbindung stehen.

Da das Gehäuse des Bleisäure-Akkumulators überwiegend aus einem Kunststoffmaterial gefertigt ist, um Gewicht zu sparen, und der Schmelzpunkt der aus Blei oder einer Bleilegierung gefertigten Interkonnektoren größer ist als der Schmelzpunkt des Kunststoffmaterials kommt es beim Verschweißen der Interkonnektoren zweier benachbarter elektrochemischer Zellen zu Kunststoffeinschlüssen in der Schweißfläche. Solche Kunststoffeinschlüsse stellen einen qualitativen Defekt einer Schweißfläche dar und reduzieren dadurch die Festigkeit der Schweißfläche. Bei herkömmlichen Bleisäure-Akkumulatoren liegt der Flächenanteil der Kunststoffeinschlüsse in der Schweißfläche bei circa 50% der Schweißfläche.

US 4 429 208 A betrifft eine herkömmliche Schweißelektrodenanordnung zum Verschweißen zweier Interkonnektoren zweier benachbarter Batteriezellen, wobei die Schweißelektroden einen kreisförmigen konischen Schweißvorsprung sowie einen diesen konzentrisch umgebenden, kreisringförmigen Schmiedebereich mit einer Kontaktierungsfläche aufweisen.

DE 24 55 348 A1 betrifft ein weiteres herkömmliches Verfahren und eine herkömmliche Vorrichtung zur Herstellung einer Zwischenzellenverbindung bei elektrischen Akkumulatoren mittels zweier einander gegenüberliegenden kreisförmig ausgebildeten Elektroden.

US 4 485 959 A betrifft einen herkömmlichen Apparat zum Ausbilden von "Through-the-Partition"-Interzellenverbindungsschweißstellen. Die herkömmlichen Schweißelektroden sind als kreisförmige Schweißvorsprünge ausgebildet.

Die Aufgabe der Erfindung ist es also, ein Verfahren zum Verschweißen von Interkonnektoren bereitzustellen, welches den Anteil von eingeschlossenen Kunststoffeinschlüssen in der Schweißfläche reduziert, und welches gleichzeitig einfach und kostengünstig umzusetzen ist.

Die der vorliegenden Erfindung zugrundeliegende Aufgabe wird insbesondere durch eine Schweißelektrodenandordnung gemäß dem Gegenstand von unabhängigen Patentanspruch 1 und durch ein Verfahren zum Verschweißen von jeweils einem Interkonnektor zweier benachbarter elektrochemischer Zellen gemäß dem Gegenstand von Patentanspruch 7 gelöst. Vorteilhafte Weiterbildungen sind in den abhängigen Patentansprüchen angegeben.

Insbesondere betrifft der Gegenstand des nebengeordneten Patentanspruchs 1 eine Schweißelektrodenanordnung zum Verschweißen von jeweils einem Interkonnektor zweier benachbarter elektrochemischer Zellen eines Akkumulators, insbesondere eines Bleisäure-Akkumulators.

Dabei sind die Interkonnektoren mittels einer Gehäusetrennwand voneinander getrennt und einander auf gegenüberliegenden Seiten der Gehäusetrennwand gegenüberliegend angeordnet, wobei die Gehäusetrennwand in einem Bereich an dem sich die Interkonnektoren gegenüberliegen, eine Öffnung aufweist.

Dazu weist die Schweißelektrodenanordnung mindestens ein Paar Schweißelektroden auf, wobei jede Schweißelektrode des mindestens einen Paars an Schweißelektroden ein Einsatzteil aufweist, das dazu ausgelegt ist, einen entsprechenden Interkonnektor zu kontaktieren, und die Interkonnektoren durch die Öffnung in der Gehäusetrennwand derart zu verschweißen, dass ein Flächenanteil von Kunststoffeinschlüssen in der Schweißfläche maximal 8% der Schweißfläche beträgt.

Das Einsatzteil weist ein Schweißplättchen auf, auf dessen Vorderseite ein Schweißvorsprung ausgebildet ist, der sich von dem Schweißplättchen aus erstreckt und eine Ausnehmung aufweist.

Die Vorteile der vorliegenden Erfindung liegen auf der Hand. Insbesondere kann durch Verwenden eines erfindungsgemäßen Einsatzteils für eine Schweißelektrodenanordnung die Qualität der Verschweißung gesteigert werden. Insbesondere wird die Festigkeit der Verbindung und elektrische Leitfähigkeit verbessert.

Mithilfe der Ausnehmung werden die detektierten Schwachstellen des konventionellen Schweißvorsprungs umgangen, wodurch eine Verschweißung erzeugt werden kann, die sowohl höhere bzw. bessere mechanische als auch höhere bzw. bessere elektrische Eigenschaften aufweist.

Ferner ist nur ein Austauschen bzw. Wechseln des Einsatzteils nötig, während die restlichen Elemente der konventionellen Schweißelektrodenanordnung weiterverwendet werden können.

Damit sind auch Schweißelektrodenanordnungen, die bereits in Betrieb genommen sind, einfach, kostengünstig und schnell nachrüstbar, was die Herstellungs-, Fertigungs- und Montagekosten senken kann. Ferner kann die Ausfallzeit auf unter 5 Minuten begrenzt werden, wodurch eine Unterbrechung des Betriebs der Schweißelektrodenanordnung auf ein Minimum begrenzt werden kann, was weiter zu einer Senkung der Montagekosten beiträgt, in die auch Kosten für notwendige Stillstandzeiten eingerechnet sind.

Somit kann auch die Qualität des Akkumulators gesteigert und verbessert werden.

Das Einsatzteil kann mittels einer Finite-Element-Methode berechnet und simuliert werden. Dadurch können Schwachstellen des konventionellen Einsatzteils einfach und kostengünstig gefunden und verhindert werden. Dies führt zu einer verbesserten Schweißfläche und damit zu einer höheren Qualität der Verschweißung.

Gemäß einem weiteren Aspekt der Erfindung weist der Schweißvorsprung zumindest im Wesentlichen die Form eines Prismas mit einer Grundfläche eines rundstirnigen Rechtecks und die Ausnehmung zumindest im Wesentlichen die Form eines Prismas mit trapezförmiger Grundfläche auf.

Gemäß einem weiteren Aspekt der Erfindung weist der Schweißvorsprung eine Kontaktierungsfläche zum Kontaktieren des Interkonnektors auf, wobei der Schweißvorsprung sich zu der Kontaktierungsfläche hin verjüngend ausgebildet ist.

Gemäß einem weiteren Aspekt der Erfindung weist die Kontaktierungsfläche einen zumindest im Wesentlichen U-förmigen oder C- förmigen Querschnitt auf.

Gemäß einem weiteren Aspekt der Erfindung ist auf der Rückseite des Schweißplättchens eine Hervorhebung zum Einführen des Einsatzteils in eine komplementär zur Hervorhebung ausgebildete Nut in der Schweißelektrode angeordnet, wobei das Einsatzteil mittels einer Befestigungsbohrung, die an der Rückseite des Schweißplättchens angeordnet, an der Schweißelektrode befestigbar oder befestigt ist.

Dadurch kann das Wechseln bzw. Austauschen des Einsatzteils auf einfache (und insbesondere lösbare) Weise erfolgen, was die Kosten für Montage und die dafür benötigte Zeit senken kann. Zudem wird die Zentrierung des Einsatzteils vereinfacht.

Gemäß einem weiteren Aspekt der Erfindung sind der Schweißvorsprung und/oder die Hervorhebung integral mit dem Schweißplättchen ausgebildet sind.

Dadurch können die Herstellungskosten des Einsatzteils vorteilhafterweise gesenkt werden, da es beispielsweise kostengünstig mittels eines Gießprozesses mit optionaler anschließender Nachbearbeitung hergestellt werden kann.

Ferner betrifft der Gegenstand des unabhängigen Patentanspruchs 7 ein Verfahren zum Verschweißen von Interkonnektoren zweier mittels einer Gehäusetrennwand voneinander beabstandeten elektrochemischen Zellen eines Bleisäure-Akkumulators.

Dabei sind die zwei elektrochemischen Zellen mittels einer Gehäusetrennwand voneinander getrennt angeordnet, wobei die Interkonnektoren auf zwei gegenüberliegenden Seiten der Gehäusetrennwand einander zugewandt angeordnet sind. Mit anderen Worten, die beiden Interkonnektoren sind auf zwei gegenüberliegenden Seiten der Gehäusetrennwand derart angeordnet, dass sie einander zumindest im Wesentlichen deckungsgleich gegenüberliegen. In einem Bereich der Gehäusetrennwand, an dem sich die Interkonnektoren gegenüberliegen, ist eine Öffnung angeordnet. Das Verfahren weist dabei die folgenden Schritte auf: Kontaktieren der Interkonnektoren mit einer Schweißelektrodenanordnung und Verschweißen der Interkonnektoren.

Dabei weist die Schweißelektrodenanordnung mindestens ein Paar Schweißelektroden auf, wobei jeweils eine Schweißelektrode des mindestens einen Paars an Schweißelektroden einen der Interkonnektoren mittels eines Einsatzteils kontaktiert. Das Verschweißen der Interkonnektoren erfolgt dabei derart, dass mittels eines von den Einsatzteilen der Schweißelektroden aufgebrachten Druckes und eines an die Schweißelektrodenanordnung angelegten Stroms das Material der Interkonnektoren zumindest bereichsweise aufschmilzt und sich durch die Öffnung in der Gehäusetrennwand stoffschlüssig verbindet, und zwar so dass die erzeugte Schweißfläche einen Flächenanteil von Kunststoffeinschlüssen von maximal 8% in der Schweißfläche aufweist.

Das Einsatzteil weist ein Schweißplättchen auf, auf dessen Vorderseite ein Schweißvorsprung ausgebildet ist, der sich von dem Schweißplättchen aus erstreckt eine Ausnehmung aufweist.

Insbesondere kann durch Verwenden eines erfindungsgemäßen Einsatzteils für eine Schweißelektrode die Qualität der Verschweißung gesteigert werden. Insbesondere wird die Festigkeit der Verbindung und elektrische Leitfähigkeit verbessert.

Ferner ist nur ein Austauschen bzw. Wechseln des Einsatzteils nötig, während die restlichen Elemente der konventionellen Schweißelektrodenanordnung weiterverwendet werden können.

Damit sind auch Schweißelektrodenanordnungen, die bereits in Betrieb genommen sind, einfach, kostengünstig und schnell nachrüstbar, was die Herstellungs-, Fertigungs- und Montagekosten senken kann. Ferner kann die Ausfallzeit auf unter 5 Minuten begrenzt werden, wodurch eine Unterbrechung des Betriebs der Schweißelektrodenanordnung auf ein Minimum begrenzt werden kann, was weiter zu einer Senkung der Montagekosten beiträgt, in die auch Kosten für notwendige Stillstandzeiten eingerechnet sind.

Somit kann auch die Qualität des Akkumulators gesteigert und verbessert werden.

Mithilfe der Ausnehmung werden die detektierten Schwachstellen des konventionellen Schweißvorsprungs umgangen, wodurch eine Verschweißung erzeugt werden kann, die sowohl höhere bzw. bessere mechanische als auch höhere bzw. bessere elektrische Eigenschaften aufweist.

Gemäß einem weiteren Aspekt der Erfindung ist der Flächenanteil von Kunststoffeinschlüssen in der Schweißfläche geringer als 8%, insbesondere geringer als 4%.

Dadurch kann die Qualität der Verschweißung - und insbesondere die durch diese bewirkte elektrische Leitfähigkeit sowie die Festigkeit der Verbindung - weiter verbessert werden, so dass eine robustere Verbindung bei besseren elektrischen Eigenschaften gewährleistet werden kann.

Das Einsatzteil kann mittels Finite-Elemente-Methode berechnet und simuliert werden. Dadurch können Schwachstellen des konventionellen Einsatzteils einfach und kostengünstig gefunden und verhindert werden. Dies führt zu einer verbesserten Schweißfläche und damit zu einer höheren Qualität der Verschweißung.

Gemäß einem weiteren Aspekt der Erfindung besitzt der Schweißvorsprung eine Formgebung, welche derart berechnet und simuliert worden ist, dass der Flächenanteil von Kunststoffeinschlüssen in der Schweißfläche maximal 8%, bevorzugt geringer als 8%, besonders bevorzugt geringer als 4%, der Schweißfläche ist.

Dadurch wird gewährleistet, dass weniger Ausschuss produziert wird, was die Fertigungskosten weiter senkt.

Gemäß einem weiteren Aspekt der Erfindung weist der Schweißvorsprung die Ausnehmung derart auf, dass der Querschnitt des Schweißvorsprungs zumindest im Wesentlichen U-förmig oder C-förmig ist.

Damit werden die mit dem konventionellen Einsatzteil bzw. konventionellen Schweißvorsprung verursachten Schwachstellen vermieden, was zu einer Qualitätssteigerung führt.

Gemäß einem weiteren Aspekt der Erfindung weist der Schweißvorsprung eine Kontaktierungsfläche auf, die einen zumindest im Wesentlichen U-förmigen oder C-förmigen Querschnitt aufweist, wobei der Schweißvorsprung sich zu der Kontaktierungsfläche hin verjüngend ausgebildet ist.

Damit werden die mit dem konventionellen Einsatzteil bzw. konventionellen Schweißvorsprung verursachten Schwachstellen vermieden, was zu einer Qualitätssteigerung führt.

Gemäß einem weiteren Aspekt der Erfindung werden die Interkonnektoren mittels eines Through-The-Partition (TTP)-Schweißverfahrens verschweißt.

Dabei handelt es sich um ein einfach durchzuführendes Verfahren, wodurch die Fertigungskosten weiter reduziert werden können.

Gemäß einem weiteren Aspekt der Erfindung werden die Interkonnektoren bei einer Schweißtemperatur von 300°C bis 380°C, insbesondere 300°C bis 360°C, bevorzugt 300°C bis 340°C, besonders bevorzugt 300°C bis 320°C, verschweißt.

Insbesondere liegt die Schweißtemperatur im Bereich des Schmelzpunkts der Interkonnektoren (±5°C) bzw. nur knapp (d.h., etwa 5°C bis 15°C) über dem Schmelzpunkt der Interkonnektoren, wodurch negative Einflüsse auf das Material der Gehäusetrennwand, welches einen geringeren Schmelzpunkt als das Material der Interkonnektoren aufweist, vorteilhafterweise reduziert werden. Somit kann gewährleistet werden, dass es zu weniger Spannungen in der Gehäusetrennwand während des Schweißverfahrens und damit zu weniger Kunststoffeinschlüssen in der Schweißfläche kommt.

Gemäß einem weiteren Aspekt der Erfindung wird die Gehäusetrennwand aus Kunststoff gefertigt, der einen Schmelzpunkt von 200°C bis 250°C, insbesondere 220°C, aufweist.

Gemäß einem weiteren Aspekt der Erfindung wird die Gehäusetrennwand aus Polyethylen, Polypropylen, Polyamid, Polyoxymethylen oder einem Copolymerisat hiervon gefertigt.

Damit wird eine elektrische Isolation des Akkumulators auf eine einfache und kostengünstige Weise gewährleistet und zur gleichen Zeit kann auch das Gewicht des Akkumulators reduziert werden.

Die verschweißten Interkonnektoren können einem Drehmoment von mindestens 12 Nm, insbesondere von mindestens 16 Nm, standhalten. Damit kann die Qualität der erzeugten Verschweißung weiter gesteigert werden.

Gemäß einem weiteren Aspekt der Erfindung wird ein Bleisäure-Akkumulator angegeben, der ein Gehäuse mit einer Vielzahl von Kammern, die mittels einer Vielzahl von Gehäusetrennwänden voneinander separiert bzw. getrennt sind, und eine Vielzahl von elektrochemischen Zellen aufweist, wobei jeweils eine elektrochemische Zelle in einer entsprechenden Kammer angeordnet ist, und wobei jede elektrochemische Zelle zwei Interkonnektoren aufweist zum Ausbilden einer elektrischen Verbindung,

Dabei sind jeweils ein Interkonnektor einer ersten elektrochemischen Zelle und ein Interkonnektor einer zweiten benachbarten elektrochemischen Zelle einander auf zwei gegenüberliegenden Seiten einer Gehäusetrennwand, die die erste und zweite elektrochemische Zelle voneinander räumlich separiert bzw. trennt, gegenüberliegend angeordnet sind. Ferner weist die Gehäusetrennwand in einem Bereich an dem sich die Interkonnektoren gegenüberliegen, eine Öffnung auf, durch die die Interkonnektoren mittels des oben beschriebenen Verfahrens miteinander verbunden sind bzw. insbesondere verschweißt sind, wobei die Verbindungsfläche bzw. insbesondere die Schweißfläche einen Flächenanteil an Kunststoffeinschlüssen von maximal 8% der Schweißfläche aufweist.

Das hat vorteilhafterweise zur Folge, dass ein Bleisäure-Akkumulator mit verbesserten elektrischen und mechanischen Eigenschaften bereitgestellt werden kann, der darüber hinaus einfach und kostengünstig zu fertigen ist.

Gemäß einem weiteren Aspekt der Erfindung halten die verschweißten Interkonnektoren einem Drehmoment von mindestens 12 Nm, insbesondere von mindestens 16 Nm.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung eines Fahrzeugs;
- FIG. 2: schematische Darstellung eines erfindungsgemäßen Einsatzteils für eine Schweißelektrode;
- FIG. 3: eine schematische Darstellung einer Vorderansicht des erfindungsgemäßen Einsatzteils für eine Schweißelektrode;
- FIG. 4: Detailansicht des erfindungsgemäßen Schweißvorsprungs;
- FIG. 5: schematische Darstellung einer Seitenansicht eines erfindungsgemäßen Einsatzteils für eine Schweißelektrode;
- FIG. 6: schematische Darstellung einer Rückansicht des erfindungsgemäßen Einsatzteils für eine Schweißelektrode; und
- FIG. 7: schematische Darstellung einer Vorderansicht eines konventionellen Einsatzteils für eine Schweißelektrode.

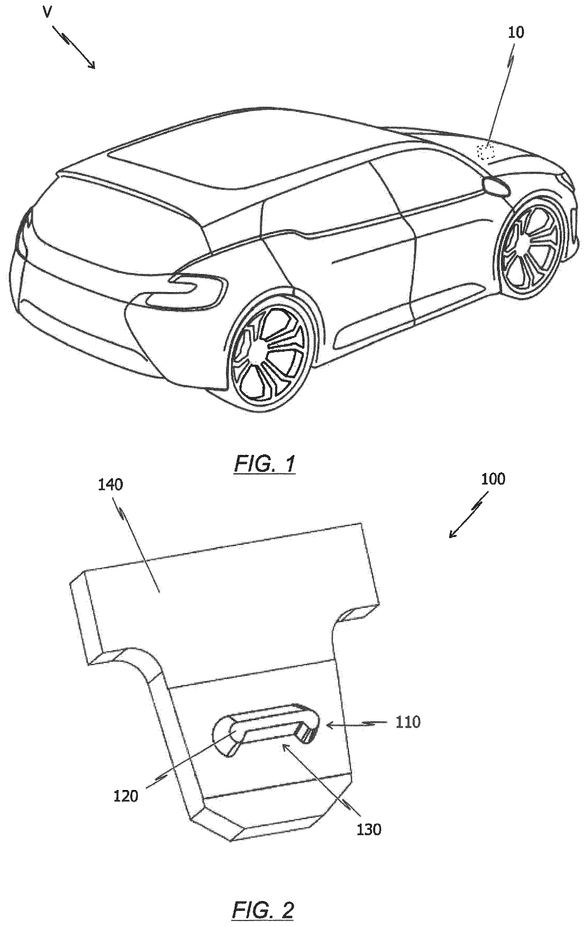

Nachfolgend wird das erfindungsgemäße Verfahren, sowie die erfindungsgemäße Schweißelektrodenanordnung unter Bezugnahme auf die Darstellungen in FIGS. 1 bis 7 genauer beschrieben. Gleiche oder gleichwirkende Elemente und Funktionen sind dabei mit denselben oder ähnlichen Bezugszeichen versehen.

Die Versorgung eines Fahrzeugs mit Energie, insbesondere mit Strom, spielt mit der stetig steigenden Zahl an Energieverbrauchern, insbesondere Stromverbrauchern, eine immer wichtigere Rolle, und zwar sowohl in verbrennungsmotorbasierten Fahrzeugen als auch in Elektrofahrzeugen und in Hybridfahrzeugen. Insbesondere fallen beim Starten eines Verbrennungsmotors hohe Ströme an, welche von einer Starterbatterie des Fahrzeugs bereitgestellt werden.

Das Fahrzeug kann hierbei ein Luft- oder Wasserfahrzeug, ein spurgeführtes Fahrzeug, ein Geländefahrzeug oder bevorzugt ein Straßenfahrzeug sein, wobei unter Straßenfahrzeug ein Personenkraftwagen, ein Lastkraftwagen, ein Bus oder ein Wohnmobil verstanden werden kann. Des Weiteren kann unter Hybridfahrzeugen jedes Fahrzeug verstanden werden, welches sowohl einen Verbrennungsmotor als auch einen Elektromotor als Energiequelle aufweist. Hybridfahrzeuge können dabei in Mikrohybrid-, Mildhybrid-, Vollhybrid- und Plug-in-Hybridfahrzeuge untergliedert werden.

Als Starterbatterien kommen insbesondere Bleisäurebatterien bzw. Bleisäure-Akkumulatoren zum Einsatz. Diese sind ausgelegt, den zum Starten des Motors benötigten elektrischen Strom bereitzustellen. Eine Bauform eines Bleisäure-Akkumulators ist beispielsweise ein Absorbent Glass Mat (AGM)-Akkumulator, bei dem der Elektrolyt in einem Vlies aus Glasfasern gebunden ist. Im Vergleich zu Nassakkumulatoren, bei denen der Elektrolyt in flüssiger Form vorhanden ist, haben AGM-Akkumulatoren den Vorteil, dass auch bei Kippen des Akkumulators kein Elektrolyt auslaufen kann. Ferner zeichnen sich AGM-Akkumulatoren durch einen niedrigen Innenwiderstand aus.

Im Folgenden werden der Bleisäure-Akkumulator und die Schweißelektrodenanordnung derart beschrieben, dass relative Begriffe auf den Einbauzustand des Bleisäure-Akkumulators bezogen sind. So bedeutet beispielsweise "in einem oberen Bereich" in einem im Einbauzustand des Bleisäure-Akkumulators gesehenen oberen Bereich, "in einem seitlichen Bereich" in einem im Einbauzustand und in Fahrtrichtung gesehenen Bereich, der sich in einem vorderen, hinteren, linken oder rechten Bereich befindet und "in einem unteren Bereich" in einem im Einbauzustand gesehenen unteren Bereich.

FIG. 1 zeigt eine schematische Darstellung eines Fahrzeugs V. Der Bleisäure-Akkumulator 10 kann hierbei in einem in Fahrtrichtung vorderen Bereich des Fahrzeugs V, in einem hinteren Bereich des Fahrzeugs V und/oder in einem Bereich unterhalb der Sitze, insbesondere unterhalb des Fahrersitzes angeordnet sein.

Gemäß der Darstellung in FIG. 1 ist der Bleisäure-Akkumulator 10 in einem vorderen Bereich des Fahrzeugs, insbesondere in einem Frontmotorraum unterhalb der Frontklappe, angeordnet.

Der Bleisäure-Akkumulator 10 weist ein Gehäuse auf, das dazu ausgebildet ist eine Vielzahl von elektrochemischen Zellen aufzunehmen. Dazu weist das Gehäuse ein einen Innenraum definierendes Gehäuseunterteil auf, dessen im Einbauzustand obere Seite bzw. obere Seitenfläche geöffnet ist, und einen Deckel auf, der dazu ausgebildet ist, die im Einbauzustand geöffnete obere Seite des Gehäuseunterteils zu verschließen.

Das Gehäuseunterteil weist ferner eine Vielzahl von Gehäusetrennwänden auf, die derart angeordnet sind, dass der Innenraum des Gehäuseunterteils in eine Vielzahl von Kammern unterteilt ist, von denen jede dazu ausgebildet ist eine elektrochemische Zelle aufzunehmen.

Das Gehäuseunterteil und der Deckel sind derart miteinander verbindbar bzw. verbunden, insbesondere verschweißbar bzw. verschweißt, dass eine gegenüber Flüssigkeiten und Gasen bzw. Gasgemischen abgedichtete Verbindung hergestellt werden kann. Dazu kann der Deckel insbesondere stoff- und/oder kraftschlüssig mit dem Gehäuseunterteil verbunden werden. Beispielsweise kann der Deckel über eine Schraubverbindung mit dem Gehäuseunterteil verbunden werden.

Der Deckel kann dabei einen positiven Anschlusspol und einen negativen Anschlusspol aufweisen, die mit elektrischen Verbrauchern oder Lasten elektrisch und mechanisch verbunden werden können. Der Deckel kann aber genauso gut anstelle des positiven und des negativen Anschlusspols eine zumindest im Wesentlichen ebene positive und negative elektrische Kontaktierungsflächen aufweisen. Dadurch kann vorteilhafter Weise die Größe und insbesondere die Höhe des Bleisäure-Akkumulators 10 reduziert werden.

Das Gehäuse, d.h. das Gehäuseunterteil inklusive der Gehäusetrennwände und der Deckel, können zumindest bereichsweise, insbesondere vollständig, aus Kunststoff gefertigt sein, um den Bleisäure-Akkumulator 10 möglichst leicht gestalten zu können. Als Material kann dabei beispielsweise Polyolefin, Acryl-Butadien-Styrol, Polycarbonat, Polyamid, Polyvinylchlorid, Polyethylenterephthalat, Polyoxymethylen oder ein Copolymer hiervon gewählt werden. Insbesondere kann das Gehäuse des Bleisäure-Akkumulators 10 aus Polyamid, Polypropylen oder Polyethylen oder einem Copolymerisat hiervon gefertigt sein.

Dabei weist das Material des Gehäuses einen Schmelzpunkt von 120°C bis 260°C auf, insbesondere 150°C bis 250°C bevorzugt 200°C bis 250°C, besonders bevorzugt 220°C bis 240°C, insbesondere circa 220°C, auf. Circa 220°C bedeutet im Sinne der vorliegenden Anmeldung 220°C ±5°C.

Genauso gut ist es allerdings auch denkbar, nur die Gehäusetrennwände aus einem oben beschriebenen Kunststoffmaterial zu fertigen. Das Gehäuseunterteil und/oder der Deckel können aus einem Metall oder einer Metalllegierung gefertigt sein. Dabei muss allerdings zusätzlich eine elektrische Isolation des Gehäuses bereitgestellt bzw. angeordnet und gewährleistet werden.

Jede elektrochemische Zelle weist eine Vielzahl von positiven Elektrodenplatten und eine Vielzahl von negativen Elektrodenplatten auf, wobei die Vielzahl von positiven Elektrodenplatten und die Vielzahl von negativen Elektrodenplatten abwechselnd und mittels jeweils eines Separators voneinander beabstandet und elektrisch getrennt angeordnet sind.

Die positiven Elektrodenplatten können mit einer positiven pastösen aktiven Masse bedeckt sein, welche optional mit einem Pastiervlies abgedeckt sein kann, welches die positive pastöse aktive Masse auf der positiven Elektrodenplatte hält und ein Lösen der positiven pastösen aktiven Masse verhindert. Analog können die negativen Elektrodenplatten mit einer negativen pastösen aktiven Masse bedeckt sein, welche wiederum mit einem Pastiervlies bedeckt sein kann, welches die negative pastöse aktive Masse auf der negativen Elektrodenplatte hält und verhindert, dass sich die negative pastöse aktive Masse von der negativen Elektrodenplatte löst.

Ferner weist die elektrochemische Zelle einen Elektrolyten auf. Dieser kann in Form einer Flüssigkeit vorliegen. Genauso gut ist es auch denkbar, einen in einem Glasfaser-Vlies gebundenen Elektrolyten zu verwenden. Bei Verwendung eines in einem Glasfaser-Vlies gebundenen Elektrolyten spricht man auch von einem Absorbent Glass Mat (AGM)-Akkumulator.

Jede elektrochemische Zelle weist darüber hinaus ein Paar Interkonnektoren auf. Insbesondere weist jede elektrochemische Zelle einen positiven Interkonnektor, welcher mit der Vielzahl von positiven Elektrodenplatten elektrisch in Verbindung steht bzw. mit diesen elektrisch verbunden ist, und einen negativen Interkonnektor auf, welcher mit der Vielzahl von negativen Elektrodenplatten elektrisch in Verbindung steht, bzw. mit diesen elektrisch verbunden ist. Mittels des positiven und negativen Interkonnektors wird ein elektrischer Strom aus der entsprechenden elektrochemischen Zelle abgeführt bzw. dieser zugeführt.

Die Interkonnektoren zweier benachbarter und mittels einer Gehäusetrennwand voneinander getrennten elektrochemischen Zellen stehen miteinander über die Trennwand, insbesondere durch eine Öffnung in der Trennwand hindurch, elektrisch in Verbindung, sodass die Vielzahl von elektrochemischen Zellen miteinander in Reihe und/oder parallel zueinander verbunden sind. Mittels dieser Verbindung wird der von dem Bleisäure-Akkumulator 10 abgebbare Gesamtstrom bzw. die Gesamtspannung bestimmt. Die Nennspannung des Bleisäure-Akkumulators 10 beträgt insbesondere circa 12V. Dazu ist die Vielzahl von elektrochemischen Zellen, insbesondere in Reihe, miteinander elektrisch verbunden.

Für eine Verbindung der Vielzahl von elektrochemischen Zellen in Reihe wird der positive Interkonnektor von einer ersten Zelle mit dem negativen Interkonnektor einer zweiten benachbarten elektrochemischen Zelle elektrisch verbunden. Analog wird der positive Interkonnektor der zweiten elektrochemischen Zelle mit dem negativen Interkonnektor einer dritten, zu der zweiten elektrochemischen Zelle benachbarten elektrochemischen Zelle elektrisch verbunden, usw. Der negative Interkonnektor der ersten Zelle wird mit dem negativen Anschlusspol des Bleisäure-Akkumulators 10 elektrisch verbunden. Der positive Interkonnektor der letzten elektrochemischen Zelle wird analog mit dem positiven Anschlusspol des Bleisäure-Akkumulators 10 elektrisch verbunden, sodass über den negativen und positiven Anschlusspol des Bleisäure-Akkumulators 10 die akkumulierte Spannung der einzelnen elektrochemischen Zellen abgegriffen werden kann.

Um die Interkonnektoren zweier benachbarter elektrochemischer Zellen miteinander elektrisch zu verbinden, ist in der Gehäusetrennwand eine Öffnung vorgesehen bzw. angeordnet, durch welche die Interkonnektoren der benachbarten elektrochemischen Zellen elektrisch miteinander verbunden werden. Insbesondere wird eine Schweißverbindung zwischen den Interkonnektoren der benachbarten elektrochemischen Zellen ausgebildet.

Dazu wird mittels eines Through-The-Partition (TTP)-Schweißverfahrens ein Interkonnektor einer ersten elektrochemischen Zelle durch die Öffnung in der Gehäusetrennwand mit einem Interkonnektor einer mittels der Gehäusetrennwand von der ersten elektrochemischen Zelle beabstandeten zweiten elektrochemischen Zelle verschweißt.

Insbesondere erfolgt das elektrische Kontaktieren von zwei Interkonnektoren zweier benachbarter elektrochemischer Zellen, welche mittels einer Gehäusetrennwand voneinander getrennt sind, derart, dass eine Öffnung in der Gehäusetrennwand angeordnet ist, und zwar an der Stelle, an welcher sich die beiden Interkonnektoren der jeweiligen Zellen gegenüberliegen.

Mit anderen Worten, die zu verbindenden bzw. zu verschweißenden Interkonnektoren sind zumindest im Wesentlichen deckungsgleich auf zwei sich gegenüberliegenden Seiten der Gehäusetrennwand in einem Schweißbereich der Gehäusetrennwand angeordnet. In diesem Zusammenhang bedeutet "im Wesentlichen deckungsgleich", dass sich die Umrisse der Interkonnektoren auf zwei gegenüberliegenden Seiten der Gehäusetrennwand mit mindestens 90% der von ihnen eingeschlossenen Fläche überlappen oder dass die Umrisse der Interkonnektoren (vollständig) deckungsgleich auf den zwei gegenüberliegenden Seiten der Gehäusetrennwand angeordnet sind.

In dem Schweißbereich ist ferner die Öffnung angeordnet. Die Öffnung weist eine Kontur eines Rechtecks mit abgerundeten Ecken oder eines rundstirnigen Rechtecks auf. Unter rundstirnigem Rechteck wird ein Rechteck verstanden, dessen Stirnseiten bzw. kürzeren Seiten zumindest im Wesentlichen halbrund bzw. gerundet sind. Insbesondere weist die Öffnung eine derartige Formgebung auf, dass die längere Seite der Öffnung kleiner ist als die Breite der Interkonnektoren, so dass die Öffnung vollständig von den Interkonnektoren abgedeckt ist und durch diese verschlossen wird.

Beispielsweise kann die Öffnung eine Fläche von 80 mm² bis 120 mm² aufweisen, insbesondere 90 mm² bis 100 mm².

Die Interkonnektoren der Vielzahl von elektrochemischen Zellen sind hierbei aus Blei oder einer Bleilegierung gefertigt. Der Schmelzpunkt von Blei oder der Bleilegierung liegt im Bereich von circa 300°C bis 350°C.

Zum Ausführen des unter TTP-Schweißverfahren bekannten Verfahrens wird eine erfindungsgemäße Schweißanordnung verwendet. Die Schweißanordnung weist dabei mindestens ein Paar erfindungsgemäßer Schweißelektroden auf. Jeweils ein Paar Schweißelektroden ist dabei dazu ausgelegt, eine Schweißverbindung herzustellen; d.h. mit einer Schweißelektrodenanordnung mit sechs Paaren Schweißelektroden können, insbesondere gleichzeitig, sechs Schweißverbindungen durchgeführt werden. Dabei kann jedem Paar Schweißelektroden eine Steuereinheit zum Überwachen und Steuern des Schweißvorgangs zugeordnet sein. Genauso gut ist es auch denkbar, eine (zentrale) Steuereinheit bereitzustellen bzw. anzuordnen, die alle Paare von Schweißelektroden überwacht und steuert.

Im Folgenden wird das erfindungsgemäße Verfahren und die erfindungsgemäße Schweißelektrodenanordnung an einem Beispiel mit einem Paar Schweißelektroden genauer erläutert. Selbstverständlich ist diese Ausführungsform rein exemplarisch und gilt entsprechend auch für Schweißelektrodenanordnungen mit mindestens einem Paar oder mehreren Paaren erfindungsgemäßer Schweißelektroden.

In einer beispielhaften Ausführungsform weist die Schweißelektrodenanordnung ein Paar Schweißelektroden auf. Jede Schweißelektrode weist an einem distalen Ende ein spezifisch ausgebildetes Einsatzteil 100 auf. Insbesondere wird die Schweißelektrodenanordnung derart angeordnet, dass jeweils eine Schweißelektrode mit einem spezifisch ausgeführten Einsatzteil 100 an einem entsprechenden Interkonnektor angreift, und zwar derart, dass die Einsatzteile 100 der Schweißelektroden die Interkonnektoren kontaktieren und zusammendrücken.

Insbesondere kann das Paar Schweißelektroden als eine Art Klemmen ausgeführt sein, welche eine vorbestimmte Kraft auf die Interkonnektoren aufbringen kann. Beispielsweise können die Interkonnektoren mit einer Kraft von 4 kN bis 10 kN, insbesondere mit 5 kN bis 6 kN, aneinandergedrückt werden.

Dann wird ein elektrischer Strom derart den Schweißelektroden zugeführt, dass eine Schweißtemperatur von circa 300°C bis 380°C, insbesondere 300°C bis 360°C, besonders bevorzugt 300°C bis 320°C, erzielt wird. Dies kann mittels einer mit dem Paar Schweißelektroden verbundenen und kommunizierenden Steuereinheit einfach über geeignete Sensorik überprüft und mittels entsprechender Steuerung eingehalten werden.

Bei Erreichen der Schweißtemperatur werden die Interkonnektoren an der Stelle, an welcher das Einsatzteil 100 an den Interkonnektoren anliegt, zumindest bereichsweise aufgeschmolzen. Durch den mittels der Schweißelektroden aufgebrachten Druck wird zumindest ein Teil des aufgeschmolzenen Materials der Interkonnektoren in die Öffnung in der Gehäusetrennwand gedrückt, sodass die auf beiden Seiten der Gehäusetrennwand angeordneten Interkonnektoren miteinander verschmelzen.

Nach einer vorbestimmten Aufschmelzzeit wird die Schweißelektrode noch für eine definierte Haltezeit ohne Stromzuführung, aber mit Aufbringung eines vorbestimmten Anpressdruckes an den Interkonnektoren gehalten, sodass die Verschmelzung bzw. stoffschlüssige Verbindung der Interkonnektoren in der Öffnung gewährleistet werden kann. So entsteht eine Verschweißung der Interkonnektoren nach Verfestigung des aufgeschmolzenen Materials der Interkonnektoren. Im Sinne dieser Anmeldung wird unter Verschweißung die stoffschlüssige Verbindung der Interkonnektoren nach Durchführen des Schweißvorgangs verstanden, wobei die Verbindung durch eine erzeugte Schweißfläche zwischen den Interkonnektoren definiert bzw. ausgezeichnet ist.

Die entstehende Schweißfläche entspricht zumindest im Wesentlichen der Fläche der Öffnung in der Gehäusetrennwand und liegt bevorzugt in einer Ebene mit dieser. Ferner weist die Schweißfläche zumindest im Wesentlichen eine dem Umfang der Öffnung entsprechende Kontur auf.

Da die Schmelztemperatur des Gehäuses und insbesondere der Gehäusetrennwand deutlich unterhalb der Schweißtemperatur bzw. dem Schweißtemperaturbereich liegt, wird die Gehäusetrennwand zumindest bereichsweise in einem Bereich um die Öffnung herum beim Verschweißen aufgeschmolzen. In diesem Zusammenhang wird unter dem Begriff "deutlich unterhalb" eine Temperaturdifferenz von mindestens 100°C, insbesondere circa 100°C bis 150°C, zwischen dem Material der Interkonnektoren und dem Material der Gehäusetrennwand verstanden.

Aufgrund des durch die Schweißelektroden aufgebrachten Druckes und der dadurch entstehenden Spannungen kann es dazu kommen, dass Teile des aufgeschmolzenen Materials der Gehäusetrennwand in die Öffnung wandern.

Somit können Kunststoffeinschlüsse in der Schweißfläche entstehen, welche die Qualität der Verschweißung herabsetzen.

So wird zum einen die Festigkeit der Verschweißung durch einen hohen Kunststoffeinschluss herabgesetzt und zum anderen wird auch die elektrische Leitfähigkeit gesenkt.

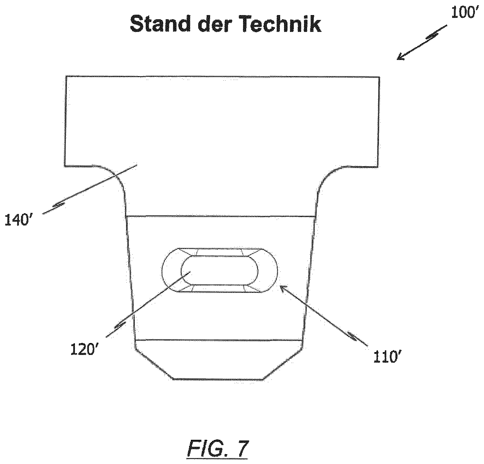

In diesem Zusammenhang zeigt FIG. 7 ein herkömmliches Einsatzteil 100' für eine Schweißelektrode. Das herkömmliche Einsatzteil 100' weist dafür ein Schweißplättchen 140' auf, an dem ein herkömmlicher Schweißvorsprung 110' angeordnet ist. Der herkömmliche Schweißvorsprung 110' kontaktiert mit einer Kontaktierungsfläche 120' das zu verschweißende Element, nämlich einen Interkonnektor.

Die herkömmliche Kontaktierungsfläche 120' weist dabei zumindest im Wesentlichen die Form eines Rechtecks mit abgerundeten Ecken oder die Form eines rundstirnigen Rechtecks auf. Dies bedeutet, dass die Stirnseiten, d.h. die kurzen Seiten des Rechtecks, insbesondere halbrund ausgeführt sind.

Mit anderen Worten, die herkömmliche Kontaktierungsfläche 120' weist zumindest im Wesentlichen eine Form auf, welche der Kontur der Öffnung entspricht.

Dabei kommt es während des Schweißvorgangs verstärkt zum Aufschmelzen des Materials der Gehäusetrennwand um die Öffnung herum. Insbesondere führt das Durchführen des TTP-Schweißverfahrens mit einem herkömmlichen Einsatzteil 100' dabei vermehrt zu Kunststoffeinschlüssen in der Schweißfläche.

Insbesondere liegt bei Verwendung des herkömmlichen Einsatzteils 100' der Flächenanteil der Kunststoffeinschlüsse nach dem Schweißvorgang bei 50% oder mehr von der Schweißfläche.

Dies stellt ein beträchtliches Qualitätsproblem dar, da sowohl die Festigkeit der Verschweißung (d.h. die verschweißten Elemente) als auch die elektrische Leitfähigkeit der Verschweißung bzw. der verschweißten Interkonnektoren negativ beeinflusst werden und insbesondere herabgesetzt sind.

Um den Flächenanteil an Kunststoffeinschlüssen zu reduzieren wird hiermit ein erfindungsgemäßes Einsatzteil 100 angegeben, welcher in FIG. 2 bis 6 dargestellt ist.

Insbesondere wurde der TTP-Schweißvorgang mittels einer Finite-Elemente-Methode (FEM) simuliert und die Schwachstellen des konventionellen Einsatzteils 100' derart optimiert, dass während des Schweißvorgangs geringere Spannungen auf den Bereich um die Öffnung in der Gehäusetrennwand aufgebracht werden bzw. in dem Bereich um die Öffnung in der Gehäusetrennwand vorhanden sind, was zu einem verringerten Kunststoffeinschluss in der entstehenden Schweißfläche führt.

Insbesondere wird die erfindungsgemäße Kontaktierungsfläche 120 mittels der Finite-Elemente-Methode ausgehend von der konventionellen Kontaktierungsfläche 120' derart optimiert, dass in der entstehenden Schweißfläche der Flächenanteil der Kunststoff-Einschlüsse bei maximal 8%, insbesondere geringer als 8%, bevorzugt geringer oder gleich 4%, der gesamten Schweißfläche ist. Besonders bevorzugt liegt der Flächenanteil der Kunststoff-Einschlüsse in der entstehenden Schweißfläche bei zumindest im Wesentlichen 0%; d.h. es sind keine Kunststoff-Einschlüsse in der entstehenden Schweißfläche vorhanden.

Dies hat den Vorteil, dass sowohl die elektrische Leitfähigkeit der Verschweißung bzw. der verschweißten Interkonnektoren verbessert wird als auch die Festigkeit der Verschweißung erhöht wird. Insbesondere soll die Verschweißung ein (Torsions-)Drehmoment von mindestens 12 Nm aushalten können, bevor die Verschweißung versagt.

Dazu kann die Kontaktierungsfläche 120 des erfindungsgemäßen Schweißvorsprungs 110 auf dem Schweißplättchen 140 zumindest im Wesentlichen die Form eines kurzschenkeligen "U" oder zumindest im Wesentlichen die Form einer Banane oder Bumerangs aufweisen.

Mit anderen Worten im Vergleich zu der herkömmlichen zumindest im Wesentlichen rundstirnigen Rechteck-förmigen Kontaktierungsfläche 120' weist die erfindungsgemäße Kontaktierungsfläche 120 eine Ausnehmung 130 auf, sodass die beim Schweißvorgang entstehende Schweißtemperatur zumindest bereichsweise geringer ist, wodurch die Spannungen zwischen der Öffnung in der Gehäusetrennwand und dem Interkonnektor während des Schweißens reduziert werden.

Bevorzugt ist die Ausnehmung 130 an einer Stelle angeordnet, an der mittels der FEM-Methode die höchsten Spannungen und Temperaturen bei dem Schweißvorgang mit konventioneller Schweißelektrode bzw. mit konventionellem Einsatzteil 100' detektier und in der Simulation bestimmt wurden. Mit anderen Worten, die Ausnehmung 130 ist an einer Stelle angeordnet, an der die Mehrheit der Kunststoffeinschlüsse in der Schweißfläche entstehen. Durch ein derart optimiertes Einsatzteil 100 kann insbesondere der Kontakt des aufgeschmolzenen Materials der Interkonnektoren mit dem Material der Gehäusetrennwand in einem Bereich um die Öffnung verringert bzw. reduziert werden, was zu geringeren Spannungen in der Gehäusetrennwand und zu geringeren Aufschmelzungen der Gehäusetrennwand führt.

Dadurch kann der Flächenanteil an Kunststoffeinschlüssen in der entstandenen Schweißfläche reduziert werden, wobei zur gleichen Zeit die Festigkeit der Verschweißung bzw. der verschweißten Interkonnektoren nicht negativ beeinflusst wird. Insbesondere können die mittels eines erfindungsgemäßen Einsatzteils verschweißten Interkonnektoren einem (Torsions-)Drehmoment zwischen den Interkonnektoren wiederstehen, das größer als der Spezifikationswert von 11 Nm ist. Insbesondere versagt die Schweißfläche zwischen den Interkonnektoren erst bei etwa 16 Nm.

Insbesondere ist der Umriss der Kontaktierungsfläche 120 kontinuierlich ausgebildet; d.h., zumindest im Wesentlichen ohne Ecken und Winkel. Dazu sind alle (spitzen) Ecken und Winkel abgerundet ausgebildet, so dass der Umriss der Kontaktierungsfläche 120, sowie die Mantelfläche des Schweißvorsprungs 110 einen weichen Verlauf aufweist. Unter weichem Verlauf wird verstanden, dass keine Ecken, scharfe Kanten und/oder Winkel in einer Fläche oder einem Umriss bzw. Umfang auftreten. Dadurch kann vermieden werden, dass während eines Schweißvorgangs Spannungen auf die Gehäusetrennwand aufgebracht werden bzw. diese zumindest reduziert werden.

FIG. 2 zeigt eine schematische Darstellung eines erfindungsgemäßen Einsatzteils 100, welches ein Schweißplättchen 140 aufweist. Auf der Vorderseite des Schweißplättchens 140, welche dem zu verschweißenden Element (in diesem Fall einem Interkonnektor) zugewandt ist, ist der erfindungsgemäße Schweißvorsprung 110 angeordnet, welcher im Wesentlichen die Kontur der erfindungsgemäßen Kontaktierungsfläche 120 aufweist. Der erfindungsgemäße Schweißvorsprung 110 erstreckt sich von der Vorderseite des Schweißplättchens 140 aus zu der Kontaktierungsfläche hin, und ist insbesondere zu dieser hin verjüngend ausgebildet ist. Der Schweißvorsprung 110 weist dabei auf der in FIG. 2 unteren Seite eine Ausnehmung 130 auf, wodurch die Kontaktierungsfläche 120 die oben genannte erfindungsgemäße spezifische Form erhält.

Wie in FIG. 2 dargestellt, weist die Ausnehmung 130 im Wesentlichen eine prismatische Form mit einem symmetrischen Trapez als Grundfläche auf. Der Schweißvorsprung 110 weist zumindest im Wesentlichen eine prismatische Form mit einem rundstirnigen Rechteck als Grundfläche auf, von dem ein Teil in der Gestalt der Ausnehmung 130 derart fehlt, dass der Schweißvorsprung 110 die Kontaktierungsfläche 120 mit einem Querschnitt eines (auf dem Kopf stehenden,) kurzschenkligen "U" aufweist. Genauso gut kann die Kontaktierungsfläche 120 im Wesentlichen eine C-Form oder eine U-Form aufweisen.

Genauso gut ist es allerdings denkbar, dass die Kontaktierungsfläche 120 eine andere Formgebung aufweist. Wichtig ist es in diesem Zusammenhang nur, dass eine Verschweißung von Interkonnektoren erzielt werden kann, bei der der Flächenanteil an Kunststoffeinschlüssen kleiner als 8%, insbesondere kleiner (oder gleich) 4%, der gesamten Schweißfläche aufweist und wobei die Verschweißung ein (Torsions-)Drehmoment von mindestens 12 Nm aushält. Mit anderen Worten, die Schweißfläche darf maximal einen Flächenanteil von 8%, bevorzugt geringer als 4%, an Kunststoffeinschlüssen aufweisen und muss einem Torsionsmoment von mindestens 12 Nm standhalten, bevor die Verschweißung versagt.

Dies erfolgt insbesondere durch Simulieren des Schweißvorgangs mit dem konventionellen Einsatzteil 100' mittels einer FEM-Methode, bei der die Schwachstellen des konventionellen Schweißvorsprungs 110' und der konventionellen Kontaktierungsfläche 120' detektiert und ausgewertet werden. Dies erfolgt insbesondere dahingehend, dass ein Zusammenhang zwischen den während des Schweißvorgangs entstehenden Spannungen und Temperaturen und den in der erzeugten Schweißfläche auftretenden Kunststoffeinschlüssen (und deren Position in der Schweißfläche) ermittelt wird. Auf Grundlage dieser Ergebnisse wird dann eine alternative Formgebung der erfindungsgemäßen Kontaktierungsfläche 120 bestimmt, bei der die Schwachstellen verhindert bzw. zumindest reduziert werden können. Unter Schwachstellen werden in diesem Zusammenhang Bereiche verstanden, bei denen hohe Spannungen und/oder Temperaturen während des Schweißvorgangs in einem Bereich um die Öffnung in der Gehäusetrennwand auftreten, und an denen es nach dem Durchführen des Schweißvorgangs vermehrt zu Kunststoffeinschlüssen in der erzeugten Schweißfläche kommt.

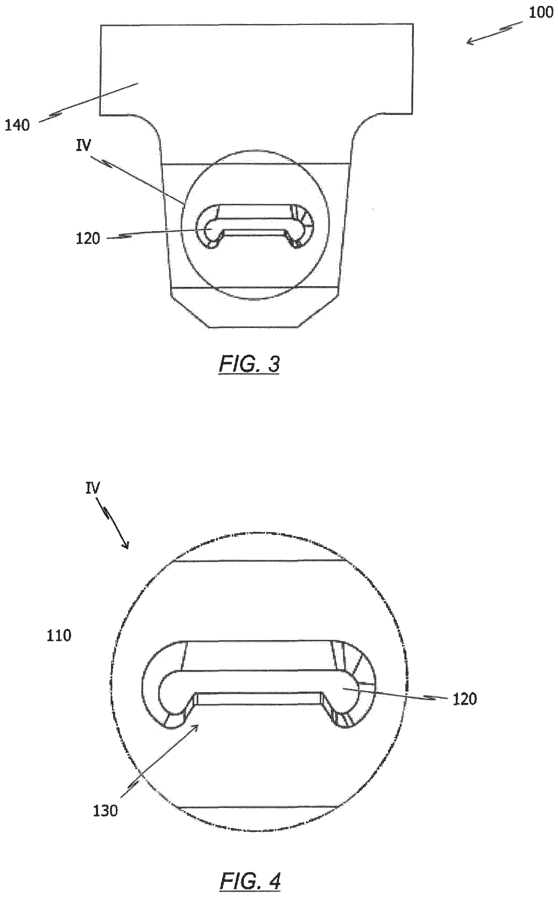

FIG. 3 zeigt die Vorderansicht eines erfindungsgemäßen Einsatzteils 100 für die Schweißelektrode. Dabei weist das Schweißplättchen140 im Wesentlichen die Form eines "T" auf. Durch eine solche Formgebung kann insbesondere bereits eine Ausrichtung des erfindungsgemäßen Einsatzteils 100 an der Schweißelektrode vorgesehen bzw. ausgebildet sein.

Ferner ist in FIG. 3 mit einem Kreis ein Bereich angedeutet, welcher in FIG. 4 in einer Detailansicht IV genauer dargestellt ist.

FIG. 4 zeigt die in FIG. 3 angedeutete Detailansicht IV des erfindungsgemäßen Schweißvorsprungs 110 mit der Ausnehmung 130 und der erfindungsgemäßen Kontaktierungsfläche 120.

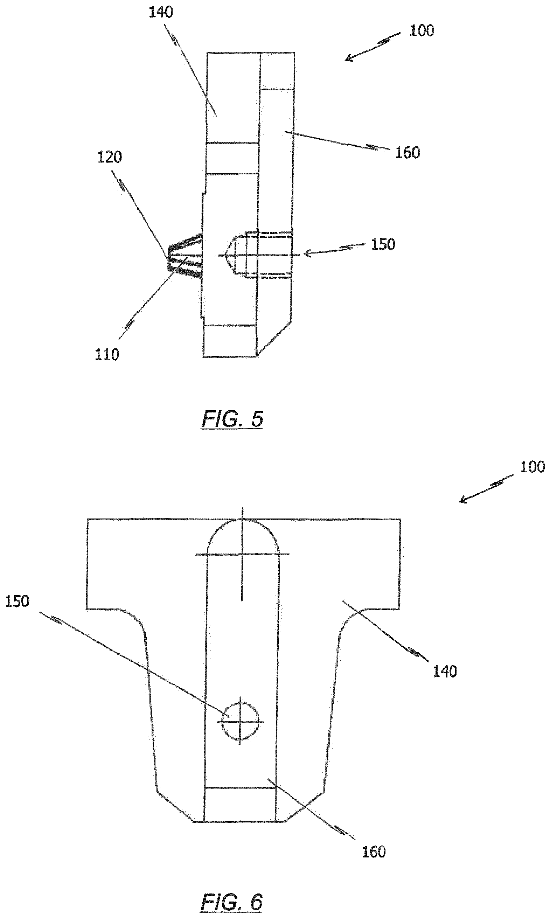

FIG. 5 zeigt eine Seitenansicht des erfindungsgemäßen Einsatzteils 100. Dabei ist erkennbar, dass auf einer Rückseite des Schweißplättchens 140, nämlich der Seite, welche dem Schweißvorsprung 110 gegenüberliegt, eine Hervorhebung 160 ausgebildet ist, welche im Wesentlichen die Form einer einseitig rundstirnig ausgebildeten Passfeder aufweist.

Ferner ist in dem Einsatzteil 100 eine durch die Hervorhebung 160 hindurchgehende und in dem Schweißplättchen 140 endende Befestigungsbohrung 150 mit einem Gewinde angeordnet, mit Hilfe derer das Einsatzteil 100 an der Schweißelektrode befestigt werden kann, und zwar mit Hilfe einer Schraube.

Dadurch kann das Einsatzteil 100 einfach und schnell gewechselt oder ausgetauscht werden, was zum einen die Werkzeugkosten senkt, da nicht die gesamte Schweißelektrodenanordnung bzw. die gesamte Schweißelektrode ausgetauscht werden muss, und zum anderen die Zeit, die zum Austauschen bzw. Wechseln des Einsatzteils 100 benötigt wird, reduziert, was Produktionskosten senken und beispielsweise einen Produktionsstopp verhindern oder zumindest verkürzen kann.

Insbesondere ist die Befestigungsbohrung 150 im Wesentlichen auf Höhe des Schweißvorsprungs 110 angeordnet.

FIG. 6 zeigt eine rückseitige Ansicht des Einsatzteils 100, auf der die Rückseite des Schweißplättchens 140 erkennbar ist. In FIG. 6 ist ferner genauer die Form der Hervorhebung 160 erkennbar, welche an einem oberen Ende halbkreisförmig ausgebildet ist, und an einem unteren Ende eine Fase aufweist.

Dabei kann die Hervorhebung 160 in eine entsprechend komplementär ausgebildete Nut in der Schweißelektrode eingeführt werden, wodurch das Einsatzteil 100 an der Schweißelektrode zentriert werden kann. Anschließend kann zur Befestigung des Einsatzteils 100 an der Schweißelektrode eine Schraube durch die Schweißelektrode hindurch in die Befestigungsbohrung 150 des Einsatzteils 100 eingeschraubt werden.

Somit kann das erfindungsgemäße Einsatzteil 100 einfach an Schweißelektroden montiert und demontiert werden, was zu einem verbesserten Handling bzw. zu einer einfacheren Handhabung führt, und damit Montagekosten und die Fehleranfälligkeit bei der Montage reduziert. Ferner können bereits in Betrieb genommene Schweißelektroden einfach, kostengünstig und schnell mit dem erfindungsgemäßen Einsatzteil 100 nachgerüstet werden. Insbesondere müssen nicht die gesamten Schweißelektroden ausgetauscht werden, sondern es reicht aus, nur das herkömmliche Einsatzteil 100' durch das erfindungsgemäße Einsatzteil 100 zu ersetzen. Dies kann insbesondere innerhalb von einer Austauschzeit von weniger als 5 Minuten erfolgen.

Mithilfe des erfindungsgemäßen Einsatzteils 100 können also die Interkonnektoren der elektrochemischen Zellen des Bleisäure-Akkumulators 10 derart verschweißt werden, dass in der Schweißfläche zwischen den Interkonnektoren der Flächenanteil an Kunststoffeinschlüssen maximal 8%, insbesondere geringer als 8%, besonders bevorzugt maximal oder geringer als 4% der gesamten Schweißfläche beträgt, wobei zeitgleich die Festigkeit der Verschweißung zwischen den Interkonnektoren derart ausgebildet ist, dass die Verschweißung einem Torsionsmoment von mindestens 12 Nm, insbesondere mindestens 16 Nm, standhält (ohne zu versagen).

Beispielsweise kann durch Verwenden des erfindungsgemäßen Einsatzteils 100 bei einer Öffnung mit einer Fläche in einer Größenordnung von 90 mm² bis 100 mm² der Flächenanteil an Kunststoffeinschlüssen in der Schweißfläche von 36 mm² bis 51 mm² auf 0 mm² bis 15 mm², bevorzugt auf 0 mm² bis 5 mm², reduziert werden.

### Bezuaszeichenliste

- V: Fahrzeug
- 10: Akkumulator
- 100: Einsatzteil für eine Schweißelektrode
- 110: Schweißvorsprung
- 120: Kontaktierungsfläche
- 130: Ausnehmung
- 140: Schweißplättchen
- 150: Befestigungsbohrung
- 160: Hervorhebung
- 100': konventionelles Einsatzteil für eine Schweißelektrode
- 110': konventioneller Schweißvorsprung
- 120': konventionelle Kontaktierungsfläche
- 140': konventionelles Schweißplättchen

## Patentansprüche

1. Schweißelektrodenanordnung zum Verschweißen von jeweils einem Interkonnektor zweier benachbarter elektrochemischer Zellen eines Akkumulators, insbesondere eines Bleisäure-Akkumulators (10),
wobei die Interkonnektoren mittels einer Gehäusetrennwand voneinander getrennt sind und einander auf gegenüberliegenden Seiten der Gehäusetrennwand gegenüberliegend angeordnet sind, wobei die Gehäusetrennwand in einem Bereich an dem sich die Interkonnektoren gegenüberliegen, eine Öffnung aufweist,
wobei die Schweißelektrodenanordnung mindestens ein Paar Schweißelektroden aufweist,
wobei mindestens eine, insbesondere jede, der Schweißelektroden des mindestens einen Paars an Schweißelektroden ein Einsatzteil (100) aufweist, das dazu ausgelegt ist, einen entsprechenden Interkonnektor zu kontaktieren, und die Interkonnektoren durch die Öffnung in der Gehäusetrennwand derart zu verschweißen, dass ein Flächenanteil von Kunststoffeinschlüssen in der Schweißfläche maximal 8% der Schweißfläche beträgt,
wobei das Einsatzteil (100) ein Schweißplättchen (140) aufweist, auf dessen Vorderseite ein Schweißvorsprung (110) ausgebildet ist, der sich von dem Schweißplättchen (140) aus erstreckt, und
wobei der Schweißvorsprung (110) eine Ausnehmung (130) aufweist.

2. Schweißelektrodenanordnung nach Anspruch 1,
wobei der Schweißvorsprung (110) zumindest im Wesentlichen die Form eines Prismas mit einer Grundfläche eines rundstirnigen Rechtecks und die Ausnehmung (130) zumindest im Wesentlichen die Form eines Prismas mit trapezförmiger Grundfläche aufweist.

3. Schweißelektrodenanordnung Anspruch 1 oder 2,
wobei der Schweißvorsprung (110) eine Kontaktierungsfläche (120) zum Kontaktieren des Interkonnektors aufweist, wobei der Schweißvorsprung (110) sich zu der Kontaktierungsfläche (120) hin verjüngend ausgebildet ist.

4. Schweißelektrodenanordnung nach Anspruch 3,
wobei die Kontaktierungsfläche (120) einen zumindest im Wesentlichen U-förmigen oder C- förmigen Querschnitt aufweist.

5. Schweißelektrodenanordnung nach einem der Ansprüche 1 bis 4,
wobei auf der Rückseite des Schweißplättchens (140) eine Hervorhebung (160) zum Einführen des Einsatzteils (100) in eine komplementär zur Hervorhebung (160) ausgebildete Nut in der Schweißelektrode angeordnet ist, wobei das Einsatzteil (100) mittels einer Befestigungsbohrung (150), die an der Rückseite des Schweißplättchens angeordnet ist, an der Schweißelektrode befestigbar oder befestigt ist.

6. Schweißelektrodenanordnung nach einem der Ansprüche 1 bis 5, wobei der Schweißvorsprung (110) und/oder die Hervorhebung (160) integral mit dem Schweißplättchen (140) ausgebildet sind.

7. Verfahren zum Verschweißen von jeweils einem Interkonnektor zweier benachbarter elektrochemischer Zellen eines Akkumulators, insbesondere eines Bleisäure-Akkumulators (10), mittels einer Schweißelektrodenanordnung nach einem der Ansprüche 1 bis 6, wobei die zwei elektrochemischen Zellen mittels einer Gehäusetrennwand voneinander getrennt angeordnet sind, wobei die Interkonnektoren auf zwei gegenüberliegenden Seiten der Gehäusetrennwand einander zugewandt angeordnet sind, wobei in einem Bereich der Gehäusetrennwand, an dem sich die Interkonnektoren gegenüberliegen, eine Öffnung angeordnet ist, und
wobei das Verfahren die folgenden Schritte aufweist:
- Kontaktieren der Interkonnektoren mit einer Schweißelektrodenanordnung, wobei die Schweißelektrodenanordnung mindestens ein Paar Schweißelektroden aufweist, wobei jeweils eine Schweißelektrode des mindestens einen Paars an Schweißelektroden einen der Interkonnektoren mittels eines Einsatzteils (100) kontaktiert;
- Verschweißen der Interkonnektoren derart, dass mittels eines von den Einsatzteilen (100) der Schweißelektroden aufgebrachten Druckes und eines an die Schweißelektrodenanordnung angelegten Stroms das Material der Interkonnektoren zumindest bereichsweise aufschmilzt und sich durch die Öffnung in der Gehäusetrennwand stoffschlüssig verbindet, und zwar so dass die erzeugte Schweißfläche einen Flächenanteil von Kunststoffeinschlüssen von maximal 8% in der Schweißfläche aufweist,
wobei das Einsatzteil (100) ein Schweißplättchen (140) aufweist, auf dessen Vorderseite ein Schweißvorsprung (110) ausgebildet ist, der sich von dem Schweißplättchen (140) aus erstreckt, und wobei der Schweißvorsprung (110) eine Ausnehmung (130) aufweist.

8. Verfahren nach Anspruch 7,
wobei der Flächenanteil von Kunststoffeinschlüssen in der Schweißfläche geringer ist als 8%, insbesondere geringer ist als 4%.

9. Verfahren nach Anspruch 7 oder 8,
wobei der Schweißvorsprung (110) eine Formgebung besitzt, welche derart berechnet und simuliert worden ist, dass der Flächenanteil von Kunststoffeinschlüssen in der Schweißfläche maximal 8%, bevorzugt geringer als 8%, besonders bevorzugt geringer als 4%, der Schweißfläche ist.

10. Verfahren nach Anspruch 9,
wobei der Schweißvorsprung (110) die Ausnehmung (130) derart aufweist, dass der Querschnitt des Schweißvorsprungs (110) zumindest im Wesentlichen U-förmig oder C-förmig ist.

11. Verfahren nach Anspruch 9 oder 10,
wobei der Schweißvorsprung (110) eine Kontaktierungsfläche (120) aufweist, die einen zumindest im Wesentlichen U-förmigen oder C-förmigen Querschnitt aufweist, wobei der Schweißvorsprung (110) sich zu der Kontaktierungsfläche (120) hin verjüngend ausgebildet ist.

12. Verfahren nach einem der Ansprüche 7 bis 11,
wobei die Interkonnektoren mittels eines Through-The-Partition (TTP)-Schweißverfahrens verschweißt werden.

13. Verfahren nach einem der Ansprüche 7 bis 12,
wobei die Interkonnektoren bei einer Schweißtemperatur von 300°C bis 380°C, insbesondere 300°C bis 360°C, bevorzugt 300°C bis 340°C, besonders bevorzugt bei 300°C bis 320°C, verschweißt werden.

14. Verfahren nach einem der Ansprüche 7 bis 13,
wobei die Gehäusetrennwand aus Kunststoff gefertigt wird, der einen Schmelzpunkt von 200°C bis 250°C, insbesondere 220°C, aufweist, wobei die Gehäusetrennwand vorzugsweise aus Polyethylen, Polypropylen, Polyamid, Polyoxymethylen oder einem Copolymerisat hiervon gefertigt wird.

15. Bleisäure-Akkumulator (10), der Folgendes aufweist:
- ein Gehäuse mit einer Vielzahl von Kammern, die mittels einer Vielzahl von Gehäusetrennwänden voneinander separiert sind;
- eine Vielzahl von elektrochemischen Zellen, wobei jeweils eine elektrochemische Zelle in einer entsprechenden Kammer angeordnet ist, und wobei jede elektrochemische Zelle zwei Interkonnektoren aufweist zum Ausbilden einer elektrischen Verbindung,
wobei jeweils ein Interkonnektor einer ersten elektrochemischen Zelle und ein Interkonnektor einer zweiten benachbarten elektrochemischen Zelle einander auf zwei gegenüberliegenden Seiten einer Gehäusetrennwand, die die erste und zweite elektrochemische Zelle voneinander räumlich separiert, gegenüberliegend angeordnet sind, wobei die Gehäusetrennwand in einem Bereich an dem sich die Interkonnektoren gegenüberliegen, eine Öffnung aufweist, durch die die Interkonnektoren mittels eines Verfahrens nach einem der Ansprüche 7 bis 14 miteinander verbunden, insbesondere verschweißt, sind, wobei die Verbindungsfläche, insbesondere die Schweißfläche, einen Flächenanteil an Kunststoffeinschlüssen von maximal 8% der Schweißfläche aufweist.

## Claims

1. Welding electrode arrangement for welding in each case one interconnector of two adjacent electrochemical cells of a rechargeable battery, in particular a lead acid rechargeable battery (10),
wherein the interconnectors are disposed so as to be separated from one another by means of a housing partition and so as to be opposite one another on opposite sides of the housing partition, wherein the housing partition has an opening in a region in which the interconnectors lie opposite one another,
wherein the welding electrode arrangement has at least one pair of welding electrodes,
wherein at least one, in particular each, of the welding electrodes of the at least one pair of welding electrodes has an insert part (100) which is conceived to contact a corresponding interconnector, and to weld the interconnectors through the opening in the housing partition in such a manner that an area proportion of plastics inclusions in the welding area is at most 8% of the welding area,
wherein the insert part (100) has a welding plate (140), on the front side of which is formed a welding protrusion (110) that extends from the welding plate (140), and
wherein the welding protrusion (110) has a recess (130).

2. Welding electrode arrangement according to Claim 1,
wherein the welding protrusion (110) has at least substantially the shape of a prism with a footprint of a round-fronted rectangle, and the recess (130) has at least substantially the shape of a prism with a trapezoidal footprint.

3. Welding electrode arrangement according to Claim 1 or 2,
wherein the welding protrusion (110) has a contacting face (120) for contacting the interconnector, wherein the welding protrusion (110) is configured so as to taper toward the contacting face (120).

4. Welding electrode arrangement according to Claim 3,
wherein the contacting face (120) has an at least substantially U-shaped or C-shaped cross section.

5. Welding electrode arrangement according to one of Claims 1 to 4,
wherein disposed on the rear side of the welding plate (140) is an elevation (160) for introducing the insert part (100) into a groove, configured in the welding electrode so as to be complementary to the elevation (160), wherein the insert part (100) by means of a fastening bore (150) which is disposed on the rear side of the welding plate is able to be fastened to, or is fastened to, the welding electrode.

6. Welding electrode arrangement according to one of Claims 1 to 5,
wherein the welding protrusion (110) and/or the elevation (160) are/is configured so as to be integral to the welding plate (140).

7. Method for welding in each case one interconnector of two adjacent electrochemical cells of a rechargeable battery, in particular a lead acid rechargeable battery (10), by means of a welding electrode arrangement according to one of Claims 1 to 6,
wherein the two electrochemical cells are disposed so as to be separated from one another by means of a housing partition, wherein the interconnectors are disposed so as to face one another on two opposite sides of the housing partition, wherein an opening is disposed in a region of the housing partition where the interconnectors are opposite one another, and
wherein the method comprises the following steps:
- contacting the interconnectors with a welding electrode arrangement, wherein the welding electrode arrangement has at least one pair of welding electrodes, wherein one welding electrode of the at least one pair of welding electrodes contacts in each case one of the interconnectors by means of an insert part (100);
- welding the interconnectors in such a manner that, by means of a pressure applied by the insert parts (100) of the welding electrodes and a current applied to the welding electrode arrangement, the material of the interconnectors melts at least in regions and is connected in a materially bonded manner through the opening in the housing partition, specifically so that the generated welding area has an area proportion of plastics inclusions of at most 8% in the welding area,
wherein the insert part (100) has a welding plate (140), on the front side of which is formed a welding protrusion (110) that extends from the welding plate (140), and wherein the welding protrusion (110) has a recess (130).

8. Method according to Claim 7,
wherein the area proportion of plastics inclusions in the welding area is less than 8%, in particular less than 4%.

9. Method according to Claim 7 or 8,
wherein the welding protrusion (110) has a shape which has been calculated and simulated in such a manner that the area proportion of plastics inclusions in the welding area is at most 8%, preferably less than 8%, particularly preferably less than 4%, of the welding area.

10. Method according to Claim 9,
wherein the welding protrusion (110) has the recess (130) in such a manner that the cross section of the welding protrusion (110) is at least substantially U-shaped or C-shaped.

11. Method according to Claim 9 or 10,
wherein the welding protrusion (110) has a contacting face (120) which has an at least substantially U-shaped or C-shaped cross section, wherein the welding protrusion (110) is configured so as to taper toward the contacting face (120).

12. Method according to one of Claims 7 to 11,
wherein the interconnectors are welded by means of a through-the-partition (TTP) welding method.

13. Method according to one of Claims 7 to 12,
wherein the interconnectors are welded at a welding temperature of 300°C to 380°C, in particular 300°C to 360°C, preferably 300°C to 340°C, particularly preferably 300°C to 320°C.

14. Method according to one of Claims 7 to 13,
wherein the housing partition is made of plastics material which has a melting point of 200°C to 250°C, in particular 220°C, wherein the housing partition is preferably made of polyethylene, polypropylene, polyamide, polyoxymethylene or a copolymer thereof.

15. Lead acid rechargeable battery (10) which has the following:
- a housing with a multiplicity of chambers which are separated from one another by means of a multiplicity of housing partitions;
- a multiplicity of electrochemical cells, wherein one electrochemical cell is in each case disposed in a corresponding chamber, and wherein each electrochemical cell has two interconnectors for configuring an electrical connection;
wherein one interconnector of a first electrochemical cell and one interconnector of a second adjacent electrochemical cell are in each case disposed opposite one another on two opposite sides of a housing partition that spatially separates the first and second electrochemical cells from one another, wherein the housing partition in a region where the interconnectors are located opposite one another has an opening by way of which the interconnectors, by means of a method as claimed in one of Claims 7 to 14, are connected, in particular welded, to one another, wherein the connecting face, in particular the welding area, has an area proportion of plastics inclusions of at most 8% of the welding area.

## Revendications

1. Ensemble électrode de soudage pour souder un interconnecteur respectif de deux cellules électrochimiques adjacentes d'un accumulateur, en particulier d'un accumulateur au plomb (10),
les interconnecteurs étant séparés l'un de l'autre par une paroi de séparation que comprend un boîtier et étant agencés l'un en face de l'autre sur des côtés opposés de la paroi de séparation que comprend le boîtier, la paroi de séparation que comprend le boîtier présentant une ouverture dans une zone dans laquelle les interconnecteurs sont en face l'un de l'autre, l'ensemble électrode de soudage comportant au moins une paire d'électrodes de soudage,
au moins une, en particulier chacune, des électrodes de soudage de ladite au moins une paire d'électrodes de soudage présentant une pièce d'insertion (100) conçue pour entrer en contact avec un interconnecteur correspondant, et les interconnecteurs étant soudés à travers l'ouverture dans la paroi de séparation que comprend le boîtier de telle sorte qu'une proportion de surface d'inclusions de matière plastique dans la surface de soudage soit au maximum de 8% de la surface de soudage,
la pièce d'insertion (100) présentant une plaquette de soudage (140) sur la face avant de laquelle est formée une saillie de soudage (110) qui s'étend à partir de la plaquette de soudage (140), et
la saillie de soudage (110) présentant un évidement (130).

2. Ensemble électrode de soudage selon la revendication 1,
dans lequel la saillie de soudage (110) présente au moins sensiblement la forme d'un prisme avec une surface de base en un rectangle à angles arrondis, et l'évidement (130) présente au moins sensiblement la forme d'un prisme ayant une surface de base trapézoïdale.

3. Ensemble électrode de soudage selon la revendication 1 ou la revendication 2,
dans lequel la saillie de soudage (110) présente une surface de contact (120) pour la mise en contact de l'interconnecteur, la saillie de soudage (110) étant réalisée de manière à se rétrécir en direction de la surface de contact (120).

4. Ensemble électrode de soudage selon la revendication 3,
dans lequel la surface de contact (120) présente une section transversale au moins sensiblement en forme de U ou de C.

5. Ensemble électrode de soudage selon l'une des revendications 1 à 4, dans lequel un relief (160) est aménagé sur la face arrière de la plaquette de soudage (140) pour insérer la pièce d'insertion (100) dans une rainure de l'électrode de soudage conçue de manière complémentaire au relief (160), la pièce d'insertion (100) étant apte à être fixée ou étant fixée à l'électrode de soudage au moyen d'un alésage de fixation (150) aménagé sur le côté arrière de la plaquette de soudage.

6. Ensemble électrode de soudage selon l'une des revendications 1 à 5, dans lequel la saillie de soudage (110) et/ou le relief (160) sont formés d'un seul tenant avec la plaquette de soudage (140).

7. Procédé de soudage d'un interconnecteur respectif de deux cellules électrochimiques adjacentes d'un accumulateur, en particulier d'un accumulateur au plomb (10), au moyen d'un agencement d'électrodes de soudage selon l'une des revendications 1 à 6,
les deux cellules électrochimiques étant séparées l'une de l'autre par une paroi de séparation que comprend le boîtier, les interconnecteurs étant agencées face à face sur deux côtés opposés de la paroi de séparation que comprend le boîtier, une ouverture étant ménagée dans une zone de la paroi de séparation que comprend le boîtier dans laquelle les interconnecteurs sont en face l'un de l'autre, et
le procédé comprenant les étapes suivantes :
- mise en contact des interconnecteurs avec un ensemble électrode de soudage, l'ensemble électrode de soudage présentant au moins une paire d'électrodes de soudage, une électrode de soudage respective de ladite au moins une paire d'électrodes de soudage étant en contact avec l'un des interconnecteurs au moyen d'un insert (100) ;
- soudage des interconnecteurs de telle sorte que, grâce à une pression exercée par les pièces d'insertion (100) des électrodes de soudage et à un courant appliqué à l'ensemble électrode de soudage, le matériau des interconnecteurs fonde au moins par endroits et se lie par matière à travers l'ouverture dans la paroi de séparation que comprend le boîtier, et ce, de telle sorte que la surface de soudage produite présente une proportion d'inclusions de matière plastique de 8% maximum dans la surface de soudage,
la pièce d'insertion (100) présentant une plaquette de soudage (140), sur la face avant de laquelle est formée une saillie de soudage (110) qui s'étend à partir de la plaquette de soudage (140), et la saillie de soudage (110) comprenant un évidement (130).

8. Procédé selon la revendication 7,
dans lequel la proportion de surface d'inclusions de matière plastique dans la surface de soudage est inférieure à 8%, en particulier inférieure à 4%.

9. Procédé selon la revendication 7 ou la revendication 8,
dans lequel la saillie de soudage (110) a une forme qui a été calculée et simulée de telle sorte que la proportion de surface d'inclusions de matière plastique dans la surface de soudage soit au maximum de 8%, de préférence inférieure à 8%, de manière particulièrement préférée inférieure à 4%, de la surface de soudage.

10. Procédé selon la revendication 9,
dans lequel la saillie de soudage (110) présente l'évidement (130) de telle sorte que la section transversale de la saillie de soudage (110) soit au moins sensiblement en forme de U ou de C.

11. Procédé selon la revendication 9 ou la revendication 10,
dans lequel la saillie de soudage (110) présente une surface de contact (120) qui présente une section transversale au moins sensiblement en forme de U ou de C, la saillie de soudage (110) étant conçue de manière à se rétrécir vers la surface de contact (120).

12. Procédé selon l'une des revendications 7 à 11,
dans lequel les interconnecteurs sont soudés au moyen d'un procédé de soudage à travers la paroi de séparation (TTP, « Through-The-Partition »).

13. Procédé selon l'une des revendications 7 à 12,
dans lequel les interconnecteurs sont soudées à une température de soudage allant de 300°C à 380°C, en particulier allant de 300°C à 360°C, de préférence allant de 300°C à 340°C, et plus particulièrement allant de 300°C à 320°C.

14. Procédé selon l'une des revendications 7 à 13,
dans lequel la paroi de séparation que comprend le boîtier est fabriquée en matière plastique ayant un point de fusion compris entre 200°C et 250°C, en particulier 220°C, la paroi de séparation que comprend le boîtier étant de préférence fabriquée en polyéthylène, polypropylène, polyamide, polyoxyméthylène ou un copolymère de ceux-ci.

15. Accumulateur au plomb (10) comprenant :
- un boîtier ayant une pluralité de compartiments séparés les uns des autres par une pluralité de parois de séparation ;
- une pluralité de cellules électrochimiques, chaque cellule électrochimique étant agencée dans un compartiment correspondant, et chaque cellule électrochimique présentant deux interconnecteurs pour établir une connexion électrique,
un interconnecteur d'une première cellule électrochimique et un interconnecteur d'une deuxième cellule électrochimique adjacente étant agencés en face l'un de l'autre sur deux côtés opposés d'une paroi de séparation que comprend le boîtier, qui sépare spatialement la première et la deuxième cellule électrochimique l'une de l'autre, la paroi de séparation que comprend le boîtier comprenant, dans une zone dans laquelle les interconnecteurs sont en face l'un de l'autre, une ouverture à travers laquelle les interconnecteurs sont reliés entre eux, en particulier sont soudés, au moyen d'un procédé selon l'une des revendications 7 à 14, la surface de liaison, en particulier la surface de soudage, présentant une proportion de surface d'inclusions de matière plastique de 8% maximum de la surface de soudage.
